# FASCICULE DE BREVET EUROPEEN

(11) **EP 3 999 826 B1**
(45) Date de publication et mention de la délivrance du brevet: **24.07.2024**
(21) Numéro de dépôt: 20740687.7
(22) Date de dépôt: 11.05.2020
(51) Int. Cl.: G01J 5/08, G01J 5/20, G01J 5/02

(54) **MICRO-BOLOMÈTRE A FAIBLE CAPACITÉ THERMIQUE ET PROCÉDÉ DE FABRICATION ASSOCIÉ**
MIKROBOLOMETER MIT NIEDRIGER WÄRMEKAPAZITÄT UND ZUGEHÖRIGES HERSTELLUNGSVERFAHREN
LOW THERMAL CAPACITY MICRO-BOLOMETER AND ASSOCIATED MANUFACTURING METHOD

(30) Priorité: 16.07.2019 FR 1907993
(43) Date de publication de la demande: 25.05.2022
(73) Titulaire: LYNRED, 91120 Palaiseau (FR)
(72) Inventeur: BOUDOU, Nicolas, 38100 GRENOBLE (FR); CORTIAL, Sébastien, 38360 SASSENAGE (FR)
(74) Mandataire: Cabinet Laurent & Charras
(86) Numéro de dépôt international: PCT/FR2020/050763
(87) Numéro de publication internationale: WO 2021/009421

(56) Documents cités:
- EP-A2- 1 022 551
- US-A1- 2011 267 322
- US-A1- 2011 315 880

## Description

### DOMAINE DE L'INVENTION

La présente invention a trait au domaine de la détection de rayonnements électromagnétiques et, plus précisément, à la détection de rayonnements infrarouges. L'invention concerne, d'une part, la structure d'un micro-bolomètre dont la membrane présente une faible capacité thermique sans que l'absorption du flux infrarouge en soit impactée et, d'autre part, un procédé de réalisation associé.

### ETAT ANTERIEUR DE LA TECHNIQUE

Dans le domaine des détecteurs mis en oeuvre pour l'imagerie infrarouge, il est connu d'utiliser des dispositifs agencés sous forme matricielle, susceptibles de fonctionner à température ambiante, c'est-à-dire ne nécessitant pas de refroidissement à de très basses températures, contrairement aux dispositifs de détection appelés "détecteurs quantiques" qui eux, nécessitent un fonctionnement à très basse température.

Ces détecteurs utilisent traditionnellement la variation d'une grandeur physique d'un matériau ou assemblage de matériaux approprié(s), en fonction de la température, au voisinage de 300K. Dans le cas particulier des détecteurs micro-bolométriques, les plus couramment utilisés, cette grandeur physique est la résistivité électrique, mais d'autres grandeurs peuvent être exploitées, telle la constante diélectrique, la polarisation, la dilatation thermique, l'indice de réfraction, etc.

Un tel détecteur non refroidi associe généralement :
- des moyens d'absorption du rayonnement thermique et de conversion de celui-ci en chaleur ;
- des moyens d'isolation thermique du détecteur, de telle sorte à permettre à celui-ci de s'échauffer sous l'action du rayonnement thermique ;
- des moyens de thermométrie qui, dans le cadre d'un détecteur micro-bolométrique, mettent en oeuvre un élément résistif dont la résistance varie avec la température ;
- et des moyens de lecture des signaux électriques fournis par les moyens de thermométrie.

Les détecteurs destinés à l'imagerie thermique, ou infrarouge, sont classiquement réalisés sous la forme d'une matrice de détecteurs élémentaires formant des points d'image ou pixels, selon une ou deux dimensions. Pour garantir l'isolation thermique des détecteurs, ces derniers sont suspendus au-dessus d'un substrat via des bras de soutien.

Le substrat comporte usuellement des moyens d'adressage séquentiel des détecteurs élémentaires et des moyens d'excitation électrique et de pré-traitement des signaux électriques générés à partir de ces détecteurs élémentaires. Ce substrat et les moyens intégrés sont communément désignés par le terme « circuit de lecture ».

Pour obtenir une scène par l'intermédiaire de ce détecteur, cette scène est captée à travers une optique adaptée sur la matrice de détecteurs élémentaires, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

Plus précisément, un détecteur élémentaire est formé d'au moins une membrane mince maintenue en suspension fixe au-dessus du substrat. Une membrane « mince » correspond classiquement à une membrane dont l'épaisseur totale est de l'ordre de 0,1 à 0,5 micromètre.

La membrane intègre un matériau thermométrique qui réalise une transduction des rayonnements infrarouges, formant les moyens de thermométrie. Le volume du matériau thermométrique permet de régler le rapport signal sur bruit lors de la mesure de la résistance thermique.

La mesure de la résistance thermique du matériau thermométrique est réalisée par un matériau absorbeur, par exemple métallique, s'étendant sous le matériau thermométrique et dans les bras de soutien. Outre la lecture du signal aux bornes du matériau thermomètre, le matériau absorbeur a également pour fonction d'absorber le flux infrarouge pour le transmettre au matériau thermométrique. La quantité de rayonnements infrarouges absorbée est dépendante de la surface de cet absorbeur.

Pour optimiser l'absorption du rayonnement infrarouge, le matériau absorbeur couvre un maximum de surface dans l'empreinte du pixel. En pratique, sa surface est limitée par celle de la membrane. L'épaisseur du matériau absorbeur est ajustée de façon à ce que son impédance effective par carré soit adaptée à celle du vide : Z₀ = 377 ohm. L'absorbeur étant typiquement plein pour maximiser sa surface, l'impédance carrée de la couche de l'absorbeur est alors égale à Z₀. Si l'absorbeur était constitué d'un réseau de motifs sub-lambda présentant un taux de remplissage égal à « tau », par exemple avec un motif de plots métallique ou un motif de trous dans une couche métallique, l'impédance de la couche métallique constituant l'absorbeur serait égale à Z₀/tau. L'ajustement de cette impédance s'effectuerait donc par un épaississement de la couche métallique.

Pour garantir l'isolation électrique entre le matériau thermométrique et le matériau absorbeur métallique, une couche diélectrique est disposée entre ces deux matériaux. Deux autres couches diélectriques peuvent également être disposées de part et d'autre de la membrane pour assurer la protection et la cohésion mécanique entre les différents matériaux.

Par exemple, une membrane peut être constituée d'un empilement d'une première couche diélectrique en nitrure de silicium de 30 nanomètres d'épaisseur, d'un matériau absorbeur en nitrure de titane de 8 nanomètres d'épaisseur, d'une seconde couche diélectrique en nitrure de silicium de 30 nanomètres d'épaisseur, d'un matériau thermoélectrique en silicium amorphe de 100 nanomètres d'épaisseur, et d'une troisième couche diélectrique en nitrure de silicium de 30 nanomètres d'épaisseur. Ainsi, la membrane présente une épaisseur de 0.198 micromètre. Bien entendu, les matériaux peuvent changer et, par exemple, le matériau absorbeur peut être réalisé en titane ou en platine.

La membrane est maintenue en suspension à l'aide de bras de soutien assurant le maintien et l'isolation thermique entre la membrane et le substrat. Ces bras de soutien assurent également un lien électrique entre les contacts pratiqués en surface du circuit de lecture et les parties électriquement actives de la membrane. De manière classique, la membrane est maintenue par deux bras de soutien car deux liens électriques sont suffisants pour capter la valeur résistive des moyens de thermométrie et transmettre cette valeur au circuit de lecture. Pour capter efficacement la température de la scène observée, il n'est pas rare d'utiliser plusieurs membranes superposées, la membrane supérieure étant reliée à la membrane inférieure pour un ou plusieurs piliers.

Cependant, la masse des éléments en suspension influe sur les performances du détecteur, en particulier sur son rapport signal sur bruit et sa constante de temps.

Selon l'invention, le rapport signal sur bruit du détecteur est une grandeur indiquant la plus faible variation de température de la scène dont le détecteur est capable de produire une réponse mesurable. Le rapport signal sur bruit est couramment exprimé en mK. La constante de temps est, quant à elle, associée au temps nécessaire au détecteur pour atteindre son équilibre thermique lors d'une variation de la puissance infrarouge incidente. La constante de temps est exprimée en ms.

La masse de la membrane est étroitement liée à sa capacité thermique Cₜₕ (ou masse thermique) qui est un des deux paramètres clef opérant sur la constante de temps du bolomètre. En effet, la constante de temps, notée Tₜₕ, est égale à la résistance thermique Rₜₕ de la membrane multipliée par sa capacité thermique Cₜₕ. Ainsi, à résistance thermique équivalente, une augmentation de la capacité thermique de la membrane induit nécessairement une augmentation de la constante de temps du bolomètre. Celle-ci peut être compensée par une diminution de la résistance thermique mais au prix d'un plus faible rapport signal sur bruit car ce dernier est directement proportionnel à la résistance thermique.

Ainsi, la conception d'un bolomètre passe par l'identification d'un compromis acceptable entre le rapport signal sur bruit et la constante de temps, et ce compromis est grandement conditionné par les valeurs de la résistance thermique et de la capacité thermique.

En effet, l'utilisation de détecteurs dont la constante de temps est trop faible au regard de la rapidité des évènements de la scène entraîne une dégradation de l'image, par exemple, l'apparition de phénomènes de trainées, de flous, ou de déformation de l'objet observé. Typiquement, avec la membrane précédemment décrite, il est possible d'obtenir une constante de temps de l'ordre de 10 ms. Par ailleurs, il existe de nombreux cas pour lesquels les détecteurs bolométriques présentent un déficit de rapport signal sur bruit, en particulier toutes les applications de défense destinées à la détection et l'identification de cibles à distance.

Une solution évidente pour réduire la contrainte sur le compromis entre le rapport signal sur bruit et la constante de temps consiste à réduire la capacité thermique de la membrane, mais celle-ci présentent des limites contraignantes.

En effet, il est possible de réduire la capacité thermique en réduisant l'épaisseur de la membrane. Cependant, pour des raisons de tenue mécanique, l'épaisseur de la membrane ne peut pas être réduite en dessous d'une épaisseur limite, proche de 0,1 micromètre. Par ailleurs, il peut être envisagé de réduire les dimensions latérales de la membrane mais cette solution entraine un déficit d'absorption associé une réduction de la surface collectrice de l'absorbeur. Le rapport signal sur bruit du détecteur étant directement proportionnel à son absorption, il serait d'autant diminué.

Le problème technique de l'invention vise donc à réduire la capacité thermique d'une membrane d'un micro-bolomètre en limitant la dégradation de l'absorption du flux infrarouge.

Le document US 2011/267322 A1 divulgue un exemple de micro-bolomètre de l'état de la technique possédant une capacité thermique réduite.

### EXPOSE DE L'INVENTION

L'invention est définie par les revendications.

L'invention propose de répondre à ce problème technique en mettant en oeuvre une membrane intégrant un matériau thermométrique de volume réduit. Plus précisément, l'invention propose une membrane dont le matériau thermométrique s'étend selon une surface inférieure à celle du matériau absorbeur. Bien entendu, pour réduire le volume du matériau thermométrique, il est également possible de réduire son épaisseur.

La réduction de la surface du matériau thermométrique permet de réaliser des évidements dans les parties de la membrane qui ne sont pas en regard de la surface sur laquelle le matériau thermométrique est disposé. Les parties dans lesquelles les évidements sont réalisés comportent alors le matériau absorbeur et au moins une couche de diélectrique disposée entre le matériau absorbeur et le matériau thermométrique.

Outre le retrait du matériau absorbeur au niveau des évidements, la couche de diélectrique est également retirée à ce niveau si bien que la masse de la membrane est réduite, améliorant ainsi sa constante de temps.

Ainsi, selon un premier aspect, l'invention concerne un micro-bolomètre d'imagerie infrarouge intégrant une membrane montée en suspension au-dessus d'un substrat au moyen de bras de soutien, la membrane comportant :
- un matériau absorbeur configuré pour capter les rayonnements infrarouges ;
- un matériau thermométrique connecté au matériau absorbeur, et configuré pour réaliser une transduction des rayonnements infrarouges captés par le matériau absorbeur ; et
- au moins une couche diélectrique centrale disposée entre le matériau absorbeur et le matériau thermométrique.

L'invention se caractérise en ce que la surface du matériau thermométrique est inférieure à 0.4 fois celle de la membrane, et en ce que des évidements sont ménagés dans le matériau absorbeur et dans l'au moins une couche diélectrique centrale dans des zones de ladite membrane exemptes du matériau thermométrique.

L'invention permet de réduire la masse de la membrane en raison du faible volume du matériau thermométrique et de la présence des évidements dans le matériau absorbeur et dans la couche diélectrique. Ainsi, la membrane présente une capacité thermique plus faible que la membrane des micro-bolomètres de l'art antérieur, et ce, pour une résistance thermique constante ou plus faiblement diminuée. Il s'ensuit que la constante de temps est améliorée par rapport aux membranes existantes avec un rapport signal sur bruit équivalent. Cette réduction de la constante de temps améliore le nombre d'images pouvant être acquises par seconde par un détecteur intégrant des micro-bolomètres selon l'invention.

Avec l'invention, il est également possible d'augmenter le rapport signal sur bruit en gardant une constante de temps équivalente aux membranes existantes. Dans ce cas la résistance thermique est augmentée.

En outre, l'utilisation d'un matériau thermométrique dépourvu d'évidements ou de perforations permet de garantir la qualité de la transduction réalisée par le matériau thermométrique. Les matériaux thermométriques utilisés en bolométrie présentent un bruit dont une contribution est constituée par le bruit en fréquence. Ce dernier augmente de façon inversement proportionnelle au volume du matériau, de sorte qu'il peut devenir prédominant dans les thermomètres de faible volume.

Ainsi, dans le cadre de l'invention, les dimensions du thermomètre sont ajustées de sorte à permettre une forte réduction de la capacité thermique de la membrane et une augmentation négligeable du bruit en fréquence.

Selon l'invention, le matériau thermométrique est déposé au-dessus du matériau absorbeur. Le fait de déposer le matériau absorbeur avant le matériau thermométrique permet à cette étape de dépôt de réaliser les électrodes présentes dans les bras de soutien entre les clous d'ancrage et le matériau thermométrique. Si le matériau thermométrique est déposé sous le matériau absorbeur, la liaison électrique entre les clous d'ancrage et les électrodes présentes dans les bras de soutien est plus complexe à réaliser car des couches plus importantes de matériaux doivent être traversées.

Il est également possible de disposer un second matériau absorbeur avec des évidements au-dessus du matériau thermométrique. Ce mode de réalisation est notamment préféré lorsqu'une grande partie du matériau absorbeur est retirée dans des parties de la membrane dans lesquelles le matériau thermométrique est présent.

En outre, des évidements additionnels peuvent être réalisés dans le matériau absorbeur sous le matériau thermométrique. Ce mode de réalisation permet l'optimisation du couplage optique de l'absorbeur sur une plus grande surface. Dans ce mode de réalisation, la couche diélectrique n'est pas ajourée dans les zones de la membrane où le matériau thermométrique est présent de sorte à assurer le support du matériau thermométrique.

De préférence, le matériau thermométrique est réalisé en oxyde de vanadium ou en oxyde de titane, de sorte que la réduction de la surface du matériau thermométrique n'est pas préjudiciable à la qualité du signal de sortie du micro-bolomètre.

Il est souvent préférable de prévoir une couche diélectrique supérieure déposée au-dessus du matériau thermométrique pour encapsuler celui-ci et le passiver. Cette couche diélectrique supérieure peut s'étendre sur toute la surface de la membrane et les évidements peuvent également être réalisés à travers cette couche diélectrique supérieure pour limiter la masse de la membrane. De plus, le matériau absorbeur peut également être protégé par l'utilisation d'une couche diélectrique inférieure disposée sous le matériau absorbeur. Dans ce mode de réalisation, les évidements sont préférentiellement réalisés à travers cette couche diélectrique inférieure pour limiter encore la masse de la membrane. Ces couches diélectriques assurent la résistance mécanique de la membrane et des bras de soutien. L'épaisseur de ces couches diélectriques peut être réduite au minimum afin de réduire encore la masse suspendue et d'améliorer le temps de réponse en température.

Cependant, lorsque ces couches diélectriques sont amincies, il peut exister des problèmes de tenue mécanique de la membrane par les bras de soutien.

Selon un mode de réalisation, la membrane est soutenue par quatre bras de soutien reliés, d'une part à la membrane, et d'autre part, à quatre clous d'ancrage solidaires du substrat, de sorte à améliorer sa stabilité mécanique et permettre un amincissement plus important de ses couches diélectriques. Par exemple, avec ce mode de réalisation, l'épaisseur des couches constituant l'empilement peut être de 10 nanomètres pour les diélectriques inférieurs, central et supérieur, et de 7 nanomètres pour la couche de matériau absorbeur, de sorte que l'épaisseur totale des bras de soutien est égale à 37 nanomètres. Au contraire, dans le cas d'une géométrie de pixel à deux bras de soutien, la stabilité mécanique de la membrane impose des épaisseurs beaucoup plus importantes, c'est-à-dire supérieures à 80 nanomètres.

Avantageusement, dans le but d'une réduction de la constante de temps du bolomètre à rapport signal sur bruit inchangé, la surface du matériau thermométrique est supérieur à 0.1 fois la surface de la membrane. En effet, si la surface du matériau thermométrique est trop faible, et notamment inférieure à 0.1 fois la surface de la membrane, il existe des difficultés technologiques associées à la taille des reprises de contact et à la formation des motifs du matériau thermométrique.

Par ailleurs, lorsque l'objectif est d'augmenter le rapport signal sur bruit du micro-bolomètre à constante de temps inchangée, le rapport entre la surface du matériau thermométrique et la surface de la membrane est avantageusement compris entre les mêmes valeurs de 10% et 40%. Lorsqu'il est inférieur à 10 %, la résistance thermique nécessaire à l'obtention d'une constante de temps nominale et à une sensibilité optimale est supérieure à trois fois la résistance thermique utilisée dans l'état de l'art, ce qui ne parait pas réaliste avec les technologies actuelles. Lorsque ce rapport est supérieur à 40%, le gain en sensibilité potentiel est moins important.

Par exemple, pour un pixel de 17x17 µm, la membrane peut présenter une surface de 16×16 µm, soit 256 µm². Selon l'invention, la surface du matériau thermométrique doit être inférieure à 0.4 fois la surface de la membrane, soit inférieure à 76.8 µm². Il est donc possible d'utiliser un matériau thermométrique de forme carrée avec 8 µm de côté, soit une surface de 64 µm².

La fabrication d'une membrane d'un micro-bolomètre est classiquement réalisée sur une couche sacrificielle de sorte à ce que le retrait de cette couche sacrificielle permette la mise en suspension la membrane au-dessus du substrat.

Une première étape de réalisation de la membrane consiste à déposer la couche diélectrique inférieure sur la couche sacrificielle. Le matériau absorbeur est ensuite déposé sur cette couche diélectrique inférieure. La couche diélectrique centrale est ensuite déposée sur le matériau absorbeur de sorte à isoler électriquement le matériau absorbeur du matériau thermométrique. Des ouvertures de contacts sont ensuite réalisées à travers la couche diélectrique centrale.

Le matériau thermométrique est ensuite déposé localement sur la couche diélectrique centrale et dans les ouvertures de contacts de sorte à connecter électriquement et thermiquement le matériau thermométrique avec le matériau absorbeur. Par exemple, suite au dépôt du matériau thermométrique, une étape de photolithographie et de gravure est réalisée pour structurer le matériau thermométrique de sorte que sa surface soit inférieure à la surface du matériau absorbeur.

Lorsque le matériau thermométrique est déposé et structuré, il est préférable de déposer une couche de matériau diélectrique supérieure sur le matériau thermométrique avant de réaliser une étape de gravure qui définit le contour de chaque micro-bolomètre ainsi que les bras de soutien. Il est possible, lors de cette étape, d'évider les parties de la membrane situées en dehors de la zone du matériau thermométrique.

En outre, le fait de déposer le matériau absorbeur avant le matériau thermométrique permet également à cette étape de dépôt de réaliser les électrodes présentes dans les bras de soutien entre les clous d'ancrage et le matériau thermométrique. Si le matériau thermométrique est déposé sous le matériau absorbeur, la liaison électrique entre les clous d'ancrage et les électrodes présentes dans les bras de soutien est plus complexe à réaliser car des couches plus importantes de matériaux doivent être traversées.

L'invention permet donc de limiter la masse de la membrane sans entraîner une complexification trop importante du processus de fabrication, car il n'est pas nécessaire de mettre en oeuvre une étape supplémentaire.

L'invention peut être mise en oeuvre pour toutes les dimensions connues de micro-bolomètres d'imagerie, notamment les micro-bolomètres d'imagerie formant des pixels au pas de 17 µm ou au pas de 12 µm.

### BREVE DESCRIPTION DES FIGURES

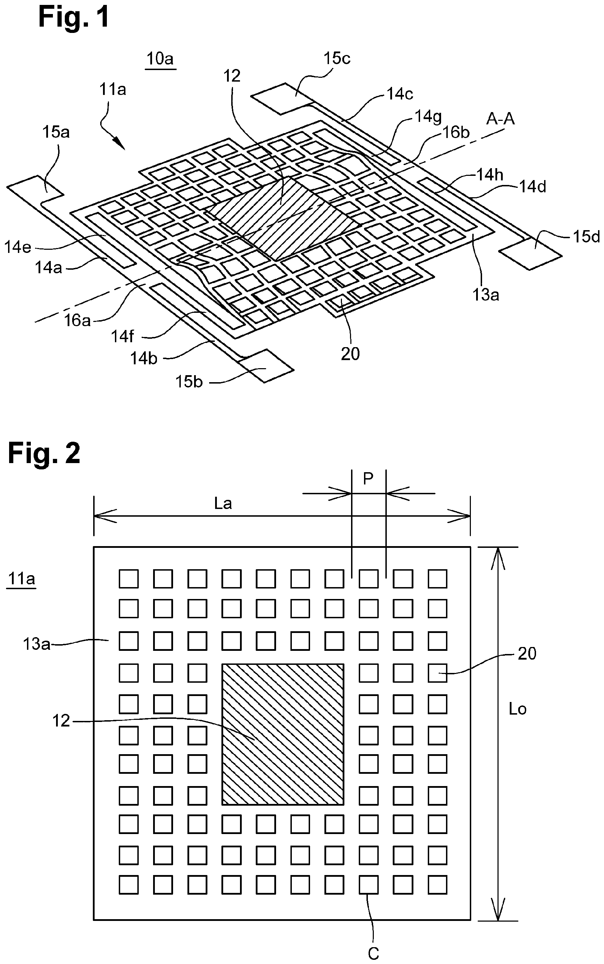

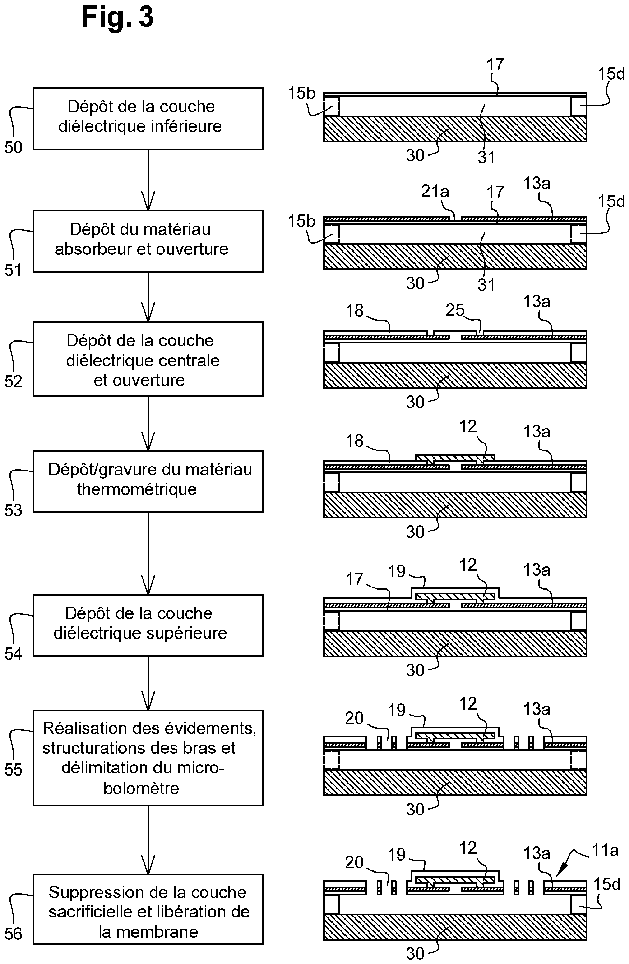

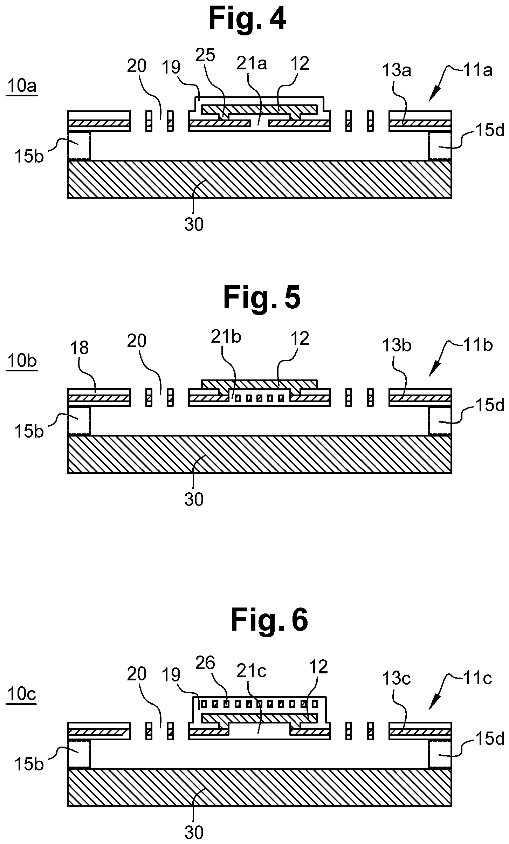

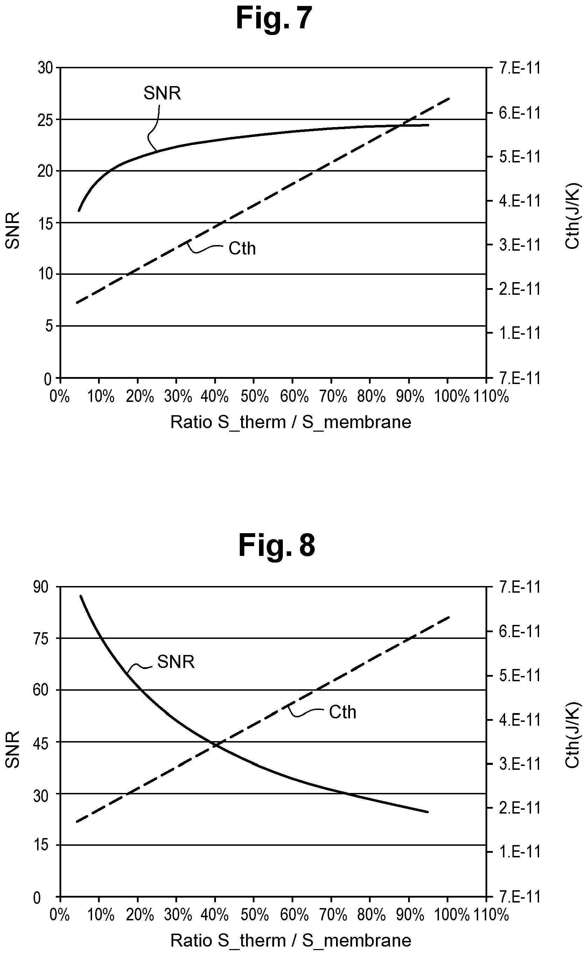

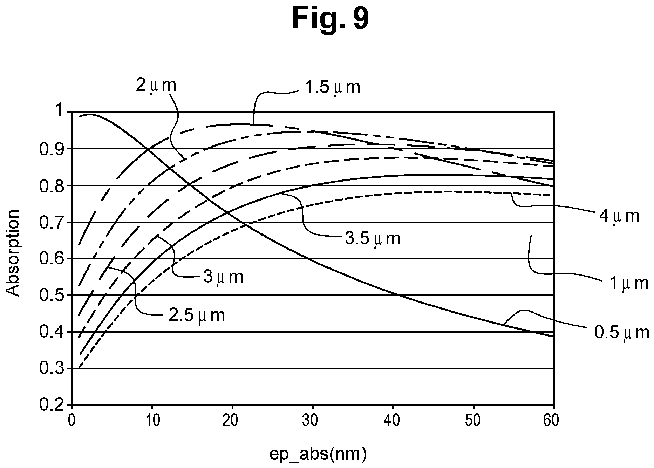

L'invention sera bien comprise à la lecture de la description qui suit, dont les détails sont donnés uniquement à titre d'exemple, et développée en relation avec les figures annexées, dans lesquelles des références identiques se rapportent à des éléments identiques :
▪ la figure 1 est une vue en perspective de dessus d'un micro-bolomètre d'imagerie selon un premier mode de réalisation de l'invention ;
▪ la figure 2 est une vue de dessus de la membrane du micro-bolomètre de la figure 1 ;
▪ la figure 3 est un ordinogramme des étapes de réalisation de la membrane de la figure 1 avec des vues successives en section de cette membrane selon l'axe A-A;
▪ la figure 4 est une vue en section du micro-bolomètre de la figure 1 ;
▪ la figure 5 est une vue en section d'un micro-bolomètre d'imagerie selon un second mode de réalisation de l'invention ;
▪ la figure 6 est une vue en section d'un micro-bolomètre d'imagerie selon un troisième mode de réalisation de l'invention ;
▪ la figure 7 est une représentation schématique de l'évolution, pour une résistance thermique constante, du rapport signal sur bruit et de la capacité thermique du micro-bolomètre de la figure 1 en fonction du rapport entre la surface du matériau thermométrique et celle de la membrane ;
▪ la figure 8 est une représentation schématique de l'évolution, pour une constante de temps spécifique, du rapport signal sur bruit et de la capacité thermique du micro-bolomètre de la figure 1 en fonction du rapport entre la surface du matériau thermométrique et celle de la membrane ; et
▪ la figure 9 est une représentation schématique de l'efficacité d'absorption d'une couche absorbeur en fonction de son épaisseur et pour différents pas de répétition du motif dont elle est constituée.

### DESCRIPTION DETAILLEE DE L'INVENTION

La figure 1 illustre un micro-bolomètre d'imagerie **10a** conforme à l'invention lors d'une simulation des déformations de sa membrane **11a.** Cette membrane **11a** est montée en suspension au-dessus d'un substrat **30.** Pour ce faire, quatre clous d'ancrage **15a-15d** sont fixés sur un substrat **30** et s'étendent perpendiculairement par rapport à celui-ci. L'exemple décrit sur la figure 1 est non limitatif et l'invention pourrait être mise en oeuvre avec uniquement deux clous d'ancrage et deux bras de soutien. La structure de la figure 1 est avantageuse car l'utilisation de quatre clous d'ancrage **15a-15d** et de quatre bras de soutien **14a-14h** permet d'amincir la membrane **11a** en limitant sa déformée mécanique, et donc corollairement, de réduire sa masse.

Chaque bras de soutien **14a-14h** est formé de deux parties reliées par un palier **16a-16b** commun à deux bras de soutien **14a-14h.** Plus précisément, une première partie **14a** d'un premier bras de soutien est reliée sur le clou d'ancrage **15a** situé en haut à gauche de la membrane **11a,** et cette première partie **14a** est connectée sur un palier **16a** disposé à gauche de la membrane **11a.**

Parallèlement à cette première partie **14a,** une seconde partie **14e** s'étend depuis le pallier **16a** pour atteindre le coin en haut à gauche de la membrane **11a.** Ce palier **16a** est également relié à un second clou d'ancrage **15b** au moyen d'une première partie **14b** d'un second bras. Une seconde partie **14f** de ce second bras s'étend parallèlement à cette première partie **14b** de ce second bras pour atteindre le coin inférieur gauche de la membrane **11a.** De la même manière, du côté droit de la membrane **11a,** une première partie **14c** d'un troisième bras de soutien s'étend entre un troisième clou d'ancrage **15c** et un palier **16b.** Une seconde partie **14g** de ce troisième bras s'étend parallèlement à la première partie **14c** de ce troisième bras pour atteindre le coin situé en haut à droite de la membrane **11a.** Le dernier bras de soutien est formé par une première partie **14d** s'étendant entre le palier **16b** et le quatrième clou d'ancrage **15d** ainsi qu'une seconde partie **14h** s'étendant parallèlement à la première partie de ce quatrième bras de soutien entre le palier **16b** et le coin inférieur droit de la membrane **11a.** La membrane **11a** est ainsi suspendue par ces quatre coins.

Tel qu'illustré sur la figure 3, la membrane **11a** peut être réalisée par une étape **50** de dépôt d'une couche diélectrique inférieure **17** sur une couche sacrificielle **31.** Cette couche diélectrique inférieure **17** n'est pas nécessaire pour réaliser l'invention mais permet de protéger le matériau absorbeur **13a** lors du retrait de la couche sacrificielle **31.**

Par exemple, les couches diélectriques **17-19** utilisées pour former la membrane **11a** peuvent être réalisés en nitrure de silicium. Dans l'exemple des figures 1 et 2, ces couches diélectriques **17-19** sont translucides et permettent d'observer le matériau thermométrique **12** et le matériau absorbeur **13a.**

Suite au dépôt de la couche diélectrique inférieure **17,** le procédé de réalisation de la membrane **11a** comporte une étape **51** de dépôt du matériau absorbeur **13a.** Cette étape inclue une structuration du matériau absorbeur **13a** en créant une ou plusieurs ouvertures **21a** de sorte à séparer électriquement les deux électrodes formées par les deux parties du matériau absorbeur **13a.** Dans l'exemple de la figure 3, une seule ouverture **21a** est créée. Tel qu'illustré sur la figure 2, le matériau absorbeur **13a** présente préférentiellement une longueur **Lo** et une largeur **La** équivalentes à la longueur et à la largeur de la membrane **11a.** Le dépôt du matériau absorbeur **13a** est ainsi réalisé sur toute la surface de la membrane **11a.** Le matériau absorbeur **13a** est classiquement métallique, tel que le nitrure de titane. Suite au dépôt du matériau absorbeur **13a,** le dépôt d'une couche diélectrique centrale **18** est réalisé, lors d'une étape **52,** afin d'isoler électriquement le matériau absorbeur **13a** du matériau thermométrique **12.** Cette couche diélectrique centrale **18** est déposée sur toute la surface du matériau absorbeur **13a.** Cette couche diélectrique centrale **18** est également structurée pour former au moins deux ouverture **25** de sorte à obtenir des contacts électriques entre le matériau absorbeur **13a** et le matériau thermométrique **12.**

Le procédé de réalisation de la membrane **11a** se poursuit par une étape **53** de dépôt du matériau thermométrique **12** sur la couche diélectrique centrale **18** et dans les ouvertures **25.** Cette étape de dépôt est particulière à l'invention puisque le matériau thermométrique **12** n'est pas disposé classiquement sur toute la surface de la couche électrique centrale **18,** mais uniquement sur une partie de celle-ci.

Par exemple, tel qu'illustré sur les figures 1 à 4, le matériau thermométrique **12** peut-être déposé sur une surface parallélépipédique rectangle centrée sur la longueur **Lo** et la largeur **La** de la membrane **11a.** En variante, d'autres formes et d'autres positionnements du matériau thermométrique **12** sont possibles.

Le positionnement central du matériau thermométrique **12** permet néanmoins de simplifier le calcul de la résistance nécessaire au bras de soutien **14a-14h** pour supporter la membrane **11a.**

Le matériau thermométrique **12** peut être réalisé dans tous les matériaux connus, tels que le silicium amorphe. De préférence, le matériau thermométrique **12** est réalisé en oxyde de vanadium ou en oxyde de titane afin de pouvoir réduire au maximum sa surface sans dégrader trop fortement le rapport signal sur bruit en sortie du micro-bolomètre d'imagerie. La surface du matériau thermométrique **12** peut, par exemple, être comprise entre 10% et 40% de la surface de la membrane **11a.**

Suite au dépôt localisé du matériau thermométrique **12,** il est préférable de déposer, dans une étape **54,** une couche diélectrique supérieure **19** afin de protéger le matériau thermométrique **12.** Cette couche diélectrique supérieure **19** est déposée à la fois sur le matériau thermométrique **12** et sur la couche diélectrique centrale **18** de sorte à recouvrir toute la surface de la membrane **11a.**

La réduction de la surface du matériau thermométrique **12** permet la réalisation d'évidements **20** à travers les parties de la membrane **11a** qui ne sont pas disposés en regard du matériau thermométrique **12.**

De préférence, la réalisation de ces évidements **20** est effectuée lors d'une étape **55** de structuration des bras de soutien **14a-14h** et de délimitation du micro-bolomètre d'imagerie **10a.** La délimitation du micro-bolomètre d'imagerie **10a** vise à séparer les pixels les uns des autres lorsqu'un détecteur est réalisé avec un ensemble de micro-bolomètres d'imagerie **10a** formant les différents pixels.

La dernière étape **56** de réalisation de la membrane **11a** consiste à supprimer la couche sacrificielle **31** afin de mettre en suspension la membrane **11a** au-dessus du substrat **30.**

Les évidements **20** peuvent prendre des motifs variés mais il est préférable que la géométrie des motifs répétés soit inchangée après une rotation de 90° autour d'un axe normal au plan de la membrane **11a** pour assurer une insensibilité du détecteur aux deux polarisations de la lumière. L'épaisseur du matériau absorbeur **13a** doit être déterminée en fonction de son taux de remplissage dans les parties de la membrane dans lesquelles les évidements **20** sont réalisés.

En outre, ces évidements **20** sont préférentiellement organisés sous la forme d'un réseau matriciel dont le pas P est d'une longueur **C** très inférieure à la longueur d'onde recherchée par le matériau absorbeur **13a.**

Typiquement, les évidements **20** illustrés sur les figures 1 et 2 sont de forme carrée avec une longueur **C** comprise entre 0.7 et 1.2 micromètres. Ces évidements **20** sont conformés sous la forme d'un réseau matriciel avec un pas **P** compris entre 0.6 et 1.2 micromètre.

La figure 9 illustre l'efficacité d'absorption d'une couche de matériau absorbeur **13a** constituée de motifs périodiques en fonction de son épaisseur, notée **ep_abs,** et pour différents pas de répétition variant de 0.5 à 4 micromètres. Ces résultats sont issus de simulations dans lesquelles le motif périodique du matériau absorbeur **13a** est une croix avec des branches horizontales et verticales présentant 300 nanomètres de côté et pour une longueur d'onde de 10 micromètres. Cette figure 9 montre que le pas entre deux motifs de ce réseau est avantageusement compris entre 0.5 et 3 micromètres ; dans ce cas l'ajustement de l'épaisseur de l'absorbeur permet une efficacité d'absorption supérieure à 85 % à la longueur d'onde de 10 micromètres.

L'augmentation de la surface des évidements réalisés au sein du matériau absorbeur **13a** et des couches diélectriques **17-19** permet de limiter la masse de la membrane **11a.** Cependant, cette augmentation réduit également les capacités de captation du matériau absorbeur **13a** ainsi que la résistance mécanique conférée par les couches diélectriques **17-19.** Afin de conserver des propriétés de captation satisfaisantes, les évidements sont disposés selon une matrice dont le pas est inférieur à la longueur d'onde d'intérêt pour le matériau absorbeur **12.**

Ainsi, en raison de la présence des évidements réalisés au sein du matériau absorbeur **13a** hors de la zone occupée par le matériau thermométrique **12,** le matériau absorbeur **13a** doit présenter une épaisseur de l'ordre de 18 nanomètres, dans le cas de l'exemple chiffré ci-dessus d'un matériau absorbeur **13a** présentant un taux de remplissage de 33%. En d'autres termes, cette épaisseur doit être supérieure à l'épaisseur optimale du matériau absorbeur **13a** situé en regard ou à l'aplomb du matériau thermométrique **12,** qui, à ce niveau, serait de l'ordre de 8 nanomètres, car, comme évoqué ci-dessus, le matériau absorbeur **13a** ne comporte pas d'évidement en cette zone spécifique. Dans le cas contraire, l'adaptation du matériau absorbeur **13a** n'est pas efficace.

Afin de supprimer ce problème, tel qu'illustré sur la figure 5, il est possible de perforer uniquement le matériau absorbeur **13b** dans la zone du matériau thermométrique **12** avec un réseau d'évidements **21b.** Ainsi, dans le mode de réalisation de la figure 5, les couches de matériaux diélectriques **17-19** ne sont pas perforées dans les parties de la membrane **11b** dans lesquelles le matériau thermométrique **12** est présent. Le gain engendré sur la masse de la membrane **11b** est négligeable, mais ce mode de réalisation permet d'obtenir un micro-bolomètre **10b** présentant une absorption rigoureusement uniforme et optimisée avec une épaisseur de métal définie pour s'adapter sur les parties de la membrane **11b** dans lesquelles le matériau thermométrique **12** est présent, typiquement 12-18 nanomètres.

Par ailleurs, le mode de réalisation de la figure 5 propose également de ne pas utiliser de couche diélectrique supérieure **19** comparativement au mode de réalisation de la figure 4. En variante, le couche diélectrique supérieure **19** peut également être supprimée dans la mode de réalisation de la figure 4 ou ajoutée au mode de réalisation de la figure 5.

Il est également possible, tel qu'illustré sur la figure 6, de retirer une grande partie du matériau absorbeur **13c** dans la zone du matériau thermométrique **12** avec un évidement **21c** de grande surface. La seule partie restante du matériau absorbeur **13c** est celle permettant de former les connexions **25** avec le matériau thermométrique **12.** Dans ce mode de réalisation, le micro-bolomètre **10c** comporte également une membrane **11c** intégrant un matériau absorbeur **26** supplémentaire disposé au-dessus du matériau thermométrique **12** de sorte à pallier au manque de matériau absorbeur sous le matériau thermométrique **12.** Ce matériau absorbeur **26** supplémentaire est également perforé sans perforer le matériau thermométrique **12.**

Ainsi, dans les modes de réalisation des figures 4 et 6, le matériau absorbeur **13a, 13c** capte efficacement les rayonnements infrarouges même si l'adaptation est uniquement optimisée sur les parties de la membrane **11a-11c** qui ne sont pas en regard de la surface du matériau thermométrique **12,** c'est-à-dire si le matériau absorbeur présente uniquement une épaisseur de l'ordre de 18 nm. Dans le mode de réalisation de la figure 5, le gain engendré sur la masse de la membrane **11b** est négligeable, mais ce mode de réalisation permet d'obtenir un micro-bolomètre **10b** présentant une absorption rigoureusement uniforme et optimisée avec une épaisseur de métal définie pour s'adapter sur les parties de la membrane **11b** dans lesquelles le matériau thermométrique **12** est présent.

L'invention permet ainsi d'obtenir une membrane **11a-11c** avec une masse particulièrement réduite, ce qui améliore la capacité thermique de cette membrane.

La figure 7 illustre, pour une même valeur de résistance thermique **Rₜₕ,** l'évolution du rapport signal sur bruit, également appelé **SNR** pour l'expression anglo-saxonne *« Signal to Noise Ratio* », d'un micro-bolomètre **10a,** conforme à celui des figures 1 à 4. La figure 7 illustre également l'évolution du celle de la capacité thermique **Cth** de la membrane **11a** en fonction du rapport entre la surface du matériau thermométrique **12,** notée **Sₜₕₑᵣₘ,** et celle de la membrane **11a,** notée **S_{membrane}.**

Pour des rapports **Sₜₕₑᵣₘ/S_{membrane}** compris entre 10 % et 40 %, le **SNR** du micro-bolomètre **10a** présente une dégradation relativement faible, comprise entre 6% et 25% tandis que, dans le même temps, la capacité thermique **Cth** de la membrane **11a** est réduite de 46% à 68%. Ainsi, l'invention permet de réduire plus fortement la capacité thermique **Cth** de la membrane **11a** que le rapport signal sur bruit du micro-bolomètre **10a.** Cette figure 7 illustre également le fait que l'invention permet d'atteindre des constantes de temps faibles associées à des rapports signal sur bruit proches de l'état de l'art.

Par ailleurs, il est possible de retrouver des valeurs de rapport signal sur bruit égales à celles de l'état de l'art, par un ajustement de la résistance thermique par exemple, tout en conservant une constante de temps réduite. Enfin, le développement des matériaux thermométriques **12** permet aujourd'hui de disposer de matériaux à fort rapport signal sur bruit ce qui constitue un levier supplémentaire pour compenser la perte de sensibilité associée à la réduction du volume du matériau thermométrique **12.**

La figure 8 illustre, pour une même valeur de constante de temps, et donc pour des valeurs de résistances thermiques Rₜₕ différentes, l'évolution du rapport signal sur bruit du micro-bolomètre **10a** et de celle de la capacité thermique **Cth** de la membrane **11a** en fonction du rapport **Sₜₕₑᵣₘ/S_{membrane}.** Cette figure 8 illustre le fait que l'invention combinée à une augmentation de la résistance thermique Rₜₕ permet de réaliser des détecteurs à forte sensibilité et à constante de temps proche de l'état de l'art. Par exemple, dans le cas d'un matériau thermométrique **12** présentant un rapport **Sₜₕₑᵣₘ/S_{membrane}** égal à 30 %, le rapport signal sur bruit du micro-bolomètre **10a** peut être doublé si la résistance est ajustée à la hausse.

L'invention a été testée avec un matériau thermométrique **12** en oxyde de vanadium et l'utilisation de trois couches diélectriques **17-19** telles qu'illustrées sur la figure 3. Le rapport entre la surface du matériau thermométrique **12** et la surface de la membrane **11** est sensiblement de 20 %, et les évidements **20** ont été réalisés avec une longueur de 0.8 micromètre est un pas de 1.2 micromètre. Ces tests ont permis de mettre en évidence un temps de réponse en température de l'ordre de 3 ms, ce qui constitue une amélioration très significative par rapport aux micro-bolomètres d'imagerie de l'art antérieur, qui présentent un temps de réponse en température de l'ordre de 10 ms et une sensibilité à hauteur de l'état de l'art.

Le gain obtenu par l'invention est ainsi très important et permet d'envisager des applications nouvelles aux micro-bolomètres d'imagerie, telles que la capture d'images rapides ou le suivi plus efficace d'éléments dans une scène.

## Revendications

1. Micro-bolomètre d'imagerie infrarouge (10a-10c) intégrant une membrane (11a-11c) montée en suspension au-dessus d'un substrat (30) par des bras de soutien (14a-14h), la membrane (11a-11c) comportant :
• un matériau absorbeur (13a-13c) configuré pour capter les rayonnements infrarouges ;
• un matériau thermométrique (12) connecté au matériau absorbeur (13a-13c) configuré pour réaliser une transduction des rayonnements infrarouges captés par ledit matériau absorbeur (13a-13c) ; et
• au moins une couche diélectrique centrale (18) disposée entre le matériau absorbeur (13a-13c) et le matériau thermométrique (12) ;
dans lequel :
• le matériau thermométrique (12) est déposé au-dessus du matériau absorbeur,
• la surface du matériau thermométrique (12) est inférieure à 0.4 fois la surface de la membrane (11a-11c), et
• des évidements (20) sont ménagés dans le matériau absorbeur (13a-13c) et dans l'au moins une couche diélectrique centrale (18) dans des zones de la membrane (11a-11c) exempte du matériau thermométrique (12).

2. Micro-bolomètre d'imagerie infrarouge selon la revendication 1, ***dans lequel*** un second matériau absorbeur (26) présentant des évidements est disposé au-dessus dudit matériau thermométrique (12).

3. Micro-bolomètre d'imagerie infrarouge selon l'une des revendications 1 et 2, ***dans lequel*** des évidements additionnels sont ménagés dans ledit matériau absorbeur (13b-13c), y compris dans des zones de la membrane (11b-11c) au niveau desquelles ledit matériau thermométrique (12) est présent.

4. Micro-bolomètre d'imagerie infrarouge selon l'une des revendications 1 à 3, ***dans lequel*** le matériau thermométrique (12) est réalisé en oxyde de vanadium ou en oxyde de titane.

5. Micro-bolomètre d'imagerie infrarouge selon l'une des revendications 1 à 4, ***dans lequel*** la membrane (11) comporte également une couche diélectrique supérieure (19) disposée sur le matériau thermométrique (12) et s'étendant sur la surface de la couche diélectrique centrale (18), les évidements (20) traversant la couche diélectrique supérieure (19).

6. Micro-bolomètre d'imagerie infrarouge selon l'une des revendications 1 à 5, ***dans lequel*** la membrane (11a-11c) comporte également une couche diélectrique inférieure (17) disposée sous le matériau absorbeur (13) et s'étendant selon toute la surface du matériau absorbeur (13) ; les évidements (20) traversant la couche diélectrique inférieure (17).

7. Micro-bolomètre d'imagerie infrarouge selon l'une des revendications 1 à 6, ***dans lequel*** la suspension de la membrane au-dessus du substrat (30) est réalisée au moyen de quatre bras de soutien (14a-14h), reliés d'une part, à la membrane (11a-11c), et d'autre part, à quatre clous d'ancrage (15a-15d) solidaires du substrat (30).

8. Micro-bolomètre d'imagerie selon l'une des revendications 1 à 7, ***dans lequel*** la surface du matériau thermométrique (12) est supérieure à 0.1 fois la surface de la membrane (11a-11c).

9. Procédé de réalisation d'un micro-bolomètre d'imagerie infrarouge (10) comportant les étapes suivantes :
- structuration d'au moins deux clous d'ancrage sur un substrat ;
- dépôt d'une couche sacrificielle (31) sur le substrat ;
- dépôt (50) d'une couche diélectrique inférieure (17) sur la couche sacrificielle (31) ;
- dépôt (51) d'un matériau absorbeur (13a-13c) sur la couche diélectrique inférieure (17) de sorte que le matériau absorbeur (13a-13c) soit connecté électriquement aux clous d'ancrage ;
- dépôt (52) d'une couche diélectrique centrale (18) sur ledit matériau absorbeur (13a-13c) ;
- dépôt (53) localisé d'un matériau thermométrique (12) sur la couche diélectrique centrale (18) de sorte que la surface dudit matériau thermométrique (12) soit inférieure à 0.4 fois la surface de la membrane (13a-13c) ;
- réalisation (55) d'évidements (20) à travers les couche diélectriques (17-19) et le matériau absorbeur (13a-13c) dans les parties qui ne sont pas en regard ou à l'aplomb du matériau thermométrique (12) ;
- structuration (55) des bras de soutien (14a-14h) et délimitation du micro-bolomètre d'imagerie (10a-10c) ; et
- suppression (56) de la couche sacrificielle (31).

10. Procédé de réalisation d'un micro-bolomètre d'imagerie infrarouge (10a-10c) selon la revendication 9, ***dans lequel*** les étapes de réalisation des évidements (20), de structuration des bras de soutien (14a-14h) et de délimitation du micro-bolomètre d'imagerie (10a-10c) sont réalisées simultanément par une étape de gravure (55).

11. Procédé de réalisation d'un micro-bolomètre d'imagerie infrarouge (10a-10c) selon la revendication 9 ou 10, ***dans lequel*** le procédé comporte également une étape de dépôt (54) d'une couche diélectrique supérieure (19) sur ledit matériau thermométrique (12) et sur la couche diélectrique centrale (18).

## Patentansprüche

1. Bildgebendes Infrarot-Mikrobolometer (10a-10c) mit einer integrierten Membran (11a- 11c), die auf einem Substrat (30) durch Stützarme (14a-14h) schwebend montiert ist, wobei die Membran (11a-11c) Folgendes umfasst:
• ein absorbierendes Material (13a-13c), das so konfiguriert ist, dass es die Infrarotstrahlung aufnimmt;
• ein thermometrisches Material (12), das mit dem absorbierenden Material (13a-13c) verbunden und so konfiguriert ist, dass es eine Transduktion der von dem absorbierenden Material (13a-13c) aufgenommenen Infrarotstrahlung bewirkt; und
• mindestens eine zentrale dielektrische Schicht (18), die zwischen dem absorbierenden Material (13a-13c) und dem thermometrischen Material (12) angeordnet ist;
wobei
• das thermometrische Material (12) über dem absorbierenden Material angeordnet ist,
• die Oberfläche des thermometrischen Materials (12) weniger als das 0,4-fache der Oberfläche der Membran (11a-11c) beträgt, und
• in dem absorbierenden Material (13a-13c) und in der mindestens einen zentralen dielektrischen Schicht (18) in Bereichen der Membran (11a-11c), die frei von dem thermometrischen Material (12) sind, Aussparungen (20) angeordnet sind.

2. Bildgebendes Infrarot-Mikrobolometer nach Anspruch 1, *wobei* ein zweites absorbierendes Material (26) über dem thermometrischen Material (12) angeordnet ist, das mit Aussparungen aufweist.

3. Bildgebendes Infrarot-Mikrobolometer nach einem der Ansprüche 1 oder 2, *wobei* zusätzliche Aussparungen in dem absorbierenden Material (13b-13c) hergestellt sind, einschließlich in Bereichen der Membran (11b-11c), in denen das thermometrische Material (12) vorhanden ist.

4. Bildgebendes Infrarot-Mikrobolometer nach einem der Ansprüche 1 bis 3, *wobei* das thermometrische Material (12) aus Vanadiumoxid oder Titanoxid hergestellt ist.

5. Bildgebendes Infrarot-Mikrobolometer nach einem der Ansprüche 1 bis 4, *wobei* die Membran (11) auch eine obere dielektrische Schicht (19) aufweist, die auf dem thermometrischen Material (12) angeordnet ist und sich über die Oberfläche der zentralen dielektrischen Schicht (18) erstreckt, wobei die obere dielektrische Schicht (19) die durchgehenden Aussparungen (20) aufweist.

6. Bildgebendes Infrarot-Mikrobolometer nach einem der Ansprüche 1 bis 5, *wobei* die Membran (11a-11c) auch eine untere dielektrische Schicht (17) aufweist, die unter dem absorbierenden Material (13) angeordnet ist und sich über die gesamte Oberfläche des absorbierenden Materials (13) erstreckt, wobei die untere dielektrische Schicht (17) die durchgehenden Aussparungen (20) aufweist.

7. Bildgebendes Infrarot-Mikrobolometer nach einem der Ansprüche 1 bis 6, *wobei* die Aufhängung der Membran über dem Substrat (30) mit vier Stützarmen (14a-14h) erfolgt, die einerseits mit der Membran (11a-11c) und andererseits mit vier Ankernägeln (15a-15d) verbunden sind, die fest mit dem Substrat (30) verankert sind.

8. Bildgebendes Infrarot-Mikrobolometer nach einem der Ansprüche 1 bis 7, *wobei* die Oberfläche des thermometrischen Materials (12) größer ist als das 0,1-fache der Oberfläche der Membran (11a-11c).

9. Verfahren zur Herstellung eines bildgebenden Infrarot-Mikrobolometers (10), das folgende Schritte umfasst:
• - Strukturierung von mindestens zwei Ankernägeln auf einem Substrat;
• - Aufbringen einer Opferschicht (31) auf das Substrat;
• Aufbringen (50) einer unteren dielektrischen Schicht (17) auf der Opferschicht (31);
• Aufbringen (51) eines absorbierenden Materials (13a-13c) auf die untere dielektrische Schicht (17), so dass das absorbierende Material (13a-13c) elektrisch mit den Ankernägeln verbunden ist;
• Aufbringen (52) einer zentralen dielektrischen Schicht (18) auf das absorbierende Material (13a-13c);
• lokalisierte Aufbringung (53) eines thermometrischen Materials (12) auf der zentralen dielektrischen Schicht (18), so dass die Fläche des thermometrischen Materials (12) weniger als das 0,4-fache der Fläche der Membran (13a-13c) beträgt;
• Herstellen (55) von Aussparungen (20) durch die dielektrischen Schichten (17-19) und das absorbierende Material (13a-13c) in den Teilen, die nicht dem thermometrischen Material (12) zugewandt oder lotrecht sind;
• Strukturieren (55) der Stützarme (14a-14h) und Abgrenzen des bildgebenden Mikrobolometers (10a-10c); und
• Entfernen (56) der Opferschicht (31).

10. Verfahren zur Herstellung eines bildgebenden Infrarot-Mikrobolometers (10a-10c) nach Anspruch 9, *wobei* die Schritte der Herstellung der Aussparungen (20), der Strukturierung der Stützarme (14a-14h) und der Begrenzung des bildgebenden Mikrobolometers (10a-10c) gleichzeitig durch einen Ätzschritt (55) durchgeführt werden.

11. Verfahren zur Herstellung eines bildgebenden Infrarot-Mikrobolometers (10a-10c) nach Anspruch 9 oder 10, *wobei* das Verfahren auch einen Schritt der Aufbringung (54) einer oberen dielektrischen Schicht (19) auf dem thermometrischen Material (12) und auf der zentralen dielektrischen Schicht (18) umfasst.

## Claims

1. Infrared imaging micro-bolometer (10a-10c) integrating a membrane (11a-11c) assembled in suspension above a substrate (30) by support arms (14a-14h), the membrane (11a-11c) comprising:
• an absorbing material (13a-13c) configured to capture infrared radiations;
• a thermometric material (12) connected to the absorbing material (13a-13c) configured to perform a transduction of the infrared radiations captured by said absorbing material (13a-13c); and
• at least one central dielectric layer (18) arranged between the absorbing material (13a-13c) and the thermometric material (12);
in which :
• the thermometric material (12) is deposited above the absorbing material;
• the surface of the thermometric material (12) is smaller than 0.4 time the surface area of the membrane (11a-11c), and
• recesses (20) are formed in the absorbing material (13a-13c) and in the at least one central dielectric layer (18) in areas of the membrane (11a-11c) devoid of the thermometric material (12).

2. Infrared imaging micro-bolometer according to claim 1, ***wherein*** a second absorbing material (26) provided with recesses is arranged above said thermometric material (12).

3. Infrared imaging micro-bolometer according to any of claims 1 and 2, ***wherein*** additional recesses are formed in said absorbing material (13b-13c), including in areas of the membrane (11b-11c) where said thermometric material (12) is present.

4. Infrared imaging micro-bolometer according to any of claims 1 to 3, ***wherein*** the thermometric material (12) is made of vanadium oxide or of titanium oxide.

5. Infrared imaging micro-bolometer according to any of claims 1 to 4, ***wherein*** the membrane (11) also comprises an upper dielectric layer (19) arranged on the thermometric material (12) and extending over the surface of the central dielectric layer (18), the recesses (20) crossing the upper dielectric layer (19).

6. Infrared imaging micro-bolometer according to any of claims 1 to 5, ***wherein*** the membrane (11a-11c) also comprises a lower dielectric layer (17) arranged under the absorbing material (13) and extending all over the surface of the absorbing material (13); the recesses (20) crossing the lower dielectric layer (17).

7. Infrared imaging micro-bolometer according to any of claims 1 to 6, ***wherein*** the suspension of the membrane above the substrate (30) is performed by means of four support arms (14a-14h) coupled, on the one hand, to the membrane (11a-11c) and, on the other hand, to four anchor nails (15a-15d) rigidly attached to the substrate (30).

8. Imaging micro-bolometer according to any of claims 1 to 7, ***wherein*** the surface area of the thermometric material (12) is greater than 0.1 time the surface area of the membrane (11a-11c).

9. Method of forming an infrared imaging micro-bolometer (10) comprising the steps of:
• structuring of at least two anchor nails on a substrate;
• deposition of a sacrificial layer (31) on the substrate;
• deposition (50) of a lower dielectric layer (17) on the sacrificial layer (31);
• deposition (51) of an absorbing material (13a-13c) on the lower dielectric layer (17) so that the absorbing material (13a-13c) is electrically connected to the anchor nails;
• deposition (52) of a central dielectric layer (18) on said absorbing material (13a-13c);
• local deposition (53) of a thermometric material (12) on the central dielectric layer (18) so that the surface area of said thermometric material (12) is smaller than 0.4 time the surface area of the membrane (13a-13c);
• forming (55) of recesses (20) through the dielectric layers (17-19) and the absorbing material (13a-13c) in the portions which are not in front of or vertically in line with the thermometric material (12);
• structuring (55) of the support arms (14a-14h) and delimiting of the imaging micro-bolometer (10a-10c); and
• suppression (56) of the sacrificial layer (31).

10. The method of forming an infrared imaging micro-bolometer (10a-10c) according to claim 9, ***wherein*** the steps of forming of the recesses (20), of structuring of the support arms (14a-14h), and of delimiting of the imaging micro-bolometer (10a-10c) are simultaneously performed by an etch step (55).

11. The method of forming an infrared imaging micro-bolometer (10a-10c) according to claim 9 or 10, ***wherein*** the method also comprises a step of deposition (54) of an upper dielectric layer (19) on said thermometric material (12) and on the central dielectric layer (18).
